# EUROPEAN PATENT SPECIFICATION

(11) **EP 1 366 897 B1**
(45) Date of publication and mention of the grant of the patent: **02.02.2011**
(21) Application number: 03076640.6
(22) Date of filing: 28.05.2003
(51) Int. Cl.: A23P 1/10, A23G 9/22

(54) **Method of shaping a deformable material in an envelope**
Verfahren zum Formen eines verformbaren Materials in einer Hülle
Procédé de mise en forme d'un matériau déformable dans une enveloppe

(30) Priority: 30.05.2002 BE 200200352
(43) Date of publication of application: 03.12.2003
(73) Proprietor: SOL S.p.A., 20052 Monza (IT)
(72) Inventor: Van Damme, Fabian Dagmar Benjamin, 9500 Geraardsbergen (BE); Louagie, Guy Luc, 8780 Oostrozebeke (BE); Udo, Willem-Dirk Hendrik, 4023 AJ Rijswijk (NL)
(74) Representative: Hoorweg, Petrus Nicolaas

(56) References cited:
- EP-A- 0 665 584
- EP-A- 0 827 696
- EP-A- 0 971 401
- WO-A-93/25098
- WO-A-96/08971
- JP-A- 11 040 593
- US-A- 3 410 699
- US-A- 3 728 136
- US-A- 4 413 461
- US-A- 4 970 044
- US-B1- 6 289 683
- PATENT ABSTRACTS OF JAPAN vol. 1998, no. 10, 31 August 1998 (1998-08-31) & JP 10 113946 A (APIC YAMADA KK), 6 May 1998 (1998-05-06)

## Description

The present invention relates to a method for shaping a deformable material, according to the preamble of claim 1.

Such a method is known from the patent WO 93/25098. This document describes a method of shaping pasty foodstuffs, wherein the foodstuff is arranged between two foils and then placed in a two-part mould. After the shaping in the mould, the foodstuff is cooled to the solidification or curing temperature, whereafter the foils are removed. This method has the drawback that at this temperature of the foodstuffs (for instance butter) they still adhere to the foil, and that when the foil is removed the surface of the shaped product is damaged.

According to another technique use is made in shaping a determined material of one or more moulds in which a portion of material is arranged. During the removal from the mould the problem is often encountered that particles of the material remain adhered to the wall, whereby the shape is not perfect. Envisaged here for instance is butter, which tends to stick in the mould partly due to adhesion with the wall.

The known zero adhesion technology (ZAT) is applied in some cases to obviate this problem. This results in a method wherein the moulds are for instance pre-filled with LIN (cryogenic liquid nitrogen), whereby the contact surface between the material and the mould is brought to an extremely low temperature and the product is easily released from the mould.

Such a method has the drawback that operations must take place at extremely low temperatures and that the products required for this purpose are relatively expensive.

The invention has for its object to propose an alternative method whereby the above stated problems are obviated and with which shaped end products are obtained which have a surface which is not damaged. The method according to the present invention for shaping a deformable material to the present for shaping a deformable material is distinguished by the characterizing part of claim 1.

The great advantage of this method is that when the material is at the second temperature the envelope can be easily removed without the surface of the shaped product being damaged.

The glass transition temperature is the temperature at which the material passes into the glass phase. A glass is a solid which is not in equilibrium and is metastable, amorphous and disordered with an extremely high viscosity, which also depends on the temperature and the material composition. The transition to the glass phase involves a decreased molecular movement, whereby there is an enormous decrease in the translation mobility.

In the glass phase of the shaped material the envelope can thus be removed the surface of the material without danger of damage. The extremely high viscosity of the material in the glass phase ensures that no surface particles of the formed whole remain adhered to the foil.

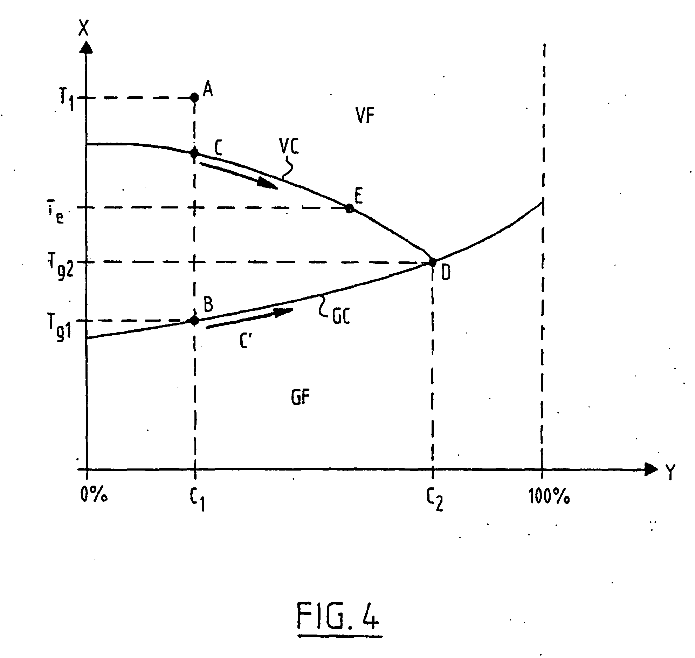

On the basis of the phase diagram shown in figure 4, there will be further elucidation of the factors which are important for the glass transition temperature. For more details about this, reference is made to the publications of Prof. Douglas Goff, University of Guelp, Canada. Figure 4 shows schematically a phase diagram, wherein the X-axis represents the percentage of solid in the solution and the Y-axis represents the temperature. The glass transition curve GC shows the glass transition temperature as a function of the concentration, and the freezing curve VC shows the solidification temperature, again as a function of the concentration. In the region below the glass transition curve GC the solution is in the glass phase GF, possibly with the presence of ice. Above GC the solution is in the liquid phase VF, with ice being present under the freezing curve.

Use is made of a solution of a solid in water with an initial concentration C₁ at a first temperature T₁ (point A) is taken as a starting point. If no phase separation (ice formation) were to occur when the temperature is decreased, the glass transition temperature is then given by Tg₁ (point B). When the temperature is lowered slowly however, ice formation will take place, whereby the concentration of solid in the solution increases and the solidification point thereof decreases in accordance with freezing curve VC (path C), and the glass transition temperature increases in accordance with the glass transition curve GC (path C').

Since co-crystallization does not generally take place at point E (the eutectic temperature), more ice formation will take place as the temperature is reduced further, and the concentration of solid will be further increased up to point D, where the solution passes into the glass phase at a temperature Tg₂. This temperature Tg₂ would be higher than the glass transition temperature if no phase formation were to take place (Tg₁) .

Experience has shown that the second temperature may be higher than the glass transition temperature of the material, without the surface of the shaped portion being damaged when the envelope is removed.

Note that the second temperature was measured immediately prior to the envelope being peeled off, and at a determined depth in the material. During cooling the surface layer was at or below the glass transition temperature and the throughput times will therefore also play a part in determining the parameters influencing the second temperature.

The temperature at which the material for shaping is sufficiently hard, so that the envelope can be removed without damaging the surface, will usually be determined empirically in practice. For ice cream for instance, the solidification temperature follows a path running from -8 to -12°C and the glass transition temperature Tg₂ is -40°C. It was determined empirically that the method according to the invention is possible at a temperature of -28°C.

In a possible method according to the invention the first temperature is just the ambient temperature. Many foodstuffs, such as dairy products, are readily deformable at ambient temperature.

Although the method according to the invention can also be used for non-foodstuffs such as clay, the deformable material in the preferred embodiment is often a foodstuff such as marzipan or dairy products.

Shaping in the preferred method of the invention takes place by compressing the material and the thin envelope. These are for instance pressed between a two-part mould, whereby the whole takes on the shape of the mould.

In the preferred embodiment of the method according to the invention, the arranging of the envelope around the portions of material takes place by arranging the portions of material between two foils.

The method of the invention can be performed with a device for shaping a deformable material, wherein the device is provided with
- supply means for portions of material for deforming, in an environment at a first temperature;
- means for arranging an envelope around the supplied portions;
- means for shaping the supplied, enveloped portions;
- means for feeding the shaped, enveloped portions through a space which can be set to a second temperature, wherein this second temperature is lower than the first temperature;
- means for peeling the envelope from the shaped, enveloped portions which have been brought to the second temperature.

In the preferred embodiment of the device, the means for arranging the envelope around the portions comprise a supply roll for a lower foil and a supply roll for an upper foil.

The peeling means preferably further comprise a roll-up system for the lower and upper foil. In this manner the portions can first be enveloped by the upper and lower foil from the supply rolls, whereupon the portions are deformed and the lower and upper foil are removed by the foil roll-up system.

In the preferred device the shaping means consist of a multi-part mould in which is placed the envelope in which the material is received, whereafter the different parts of the mould are compressed in order to bring the product into shape.

The invention will be further elucidated with reference to the annexed drawing and the figure description below. In the drawing:
figure 1 shows the principle of the method according to the invention which is for instance used to deform butter;
figure 2 shows a schematic perspective view of the preferred embodiment of the device;
figure 3 shows a schematic detail view in cross-section of the enveloping and shaping means of the device.

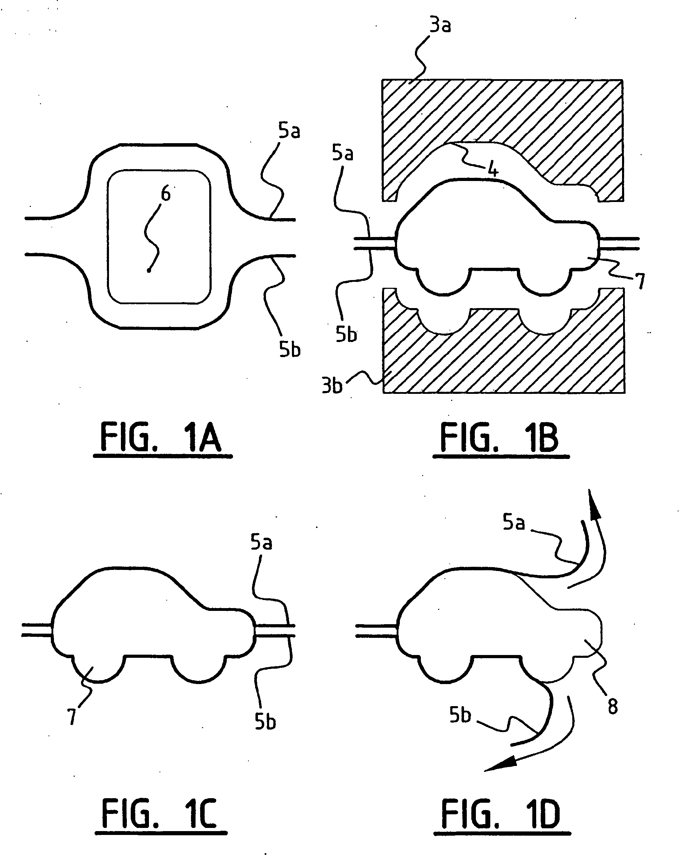

In the first step shown in figure 1, an envelope 5a, 5b is arranged around the portion of material for deforming 6. This envelope 5a, 5b is sufficiently large to be able to cover the entire surface of the interior of the mould.

In step 2 the material 6 enclosed by envelope 5a, 5b is compressed between a two-part mould 3a, 3b, wherein envelope 5a, 5b comes to adhere to the material 6 but not to the inner wall 4 of the mould.

During step 3 of figure 1, the portion 7 enclosed and shaped by envelope 5a, 5b is cooled to a temperature which is sufficiently low to avoid damaging the shaped surface of the material, but which lies above the glass transition temperature of the product and which for this application for instance amounts to -55°C.

Finally, envelope 5a, 5b is removed in step 4 of figure 1.

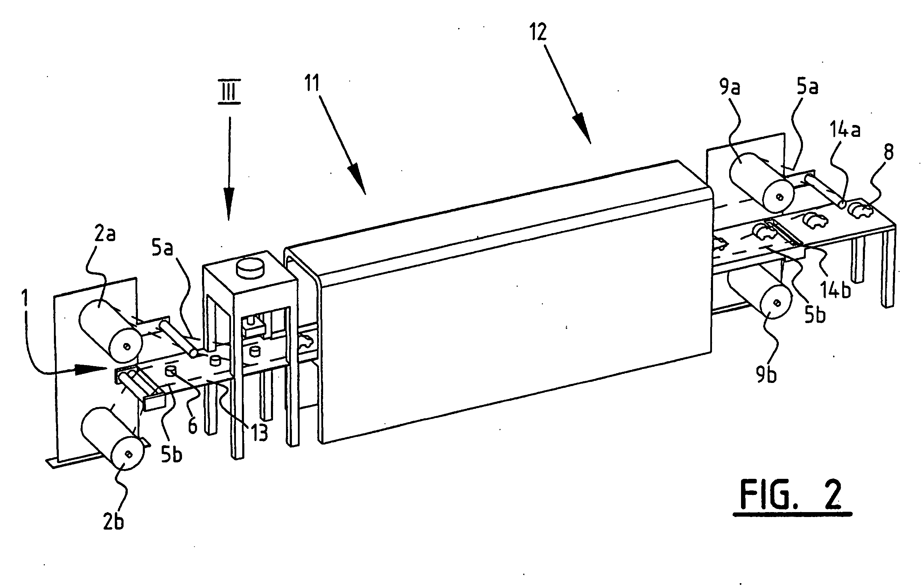

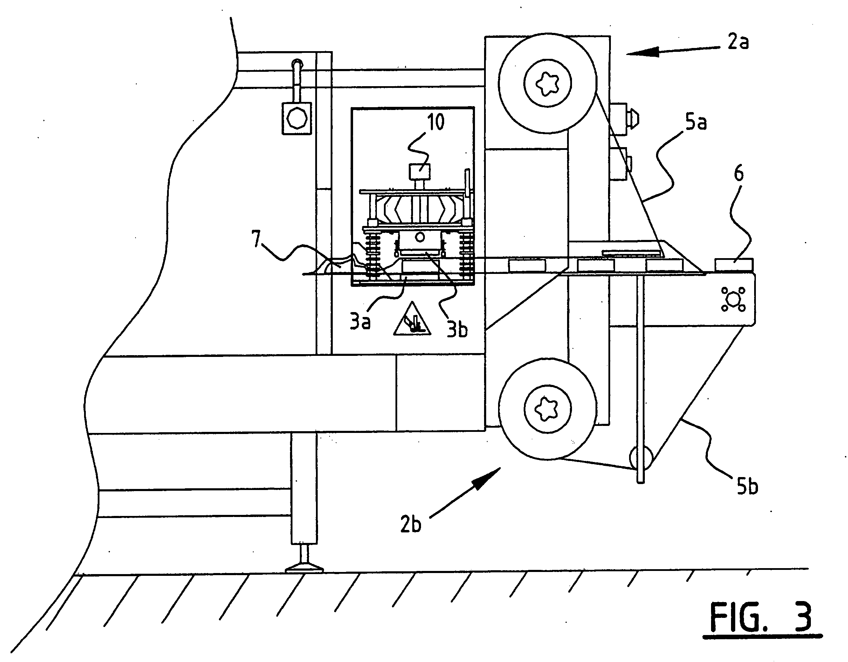

Figure 2 shows the preferred embodiment of the device according to the invention. The portions of material for deforming are supplied by supply means 1 on a surface 13 in an environment at a first temperature. The envelope consists of an upper and lower foil 5a, 5b, which are unrolled from upper and lower supply rolls 2a, 2b using guide rollers in order to envelope the supplied portions 6. This is shown in detail in figure 3.

In this embodiment the shaping means comprise a mould in two parts 3a, 3b, which are moved together using a compressed air cylinder 4.

Figure 2 then shows how the shaped, enveloped portions 7 are carried through a space 11 in which a second temperature is set lower than the first temperature. In this freezing tunnel 12 the shaped, enveloped portions 7 are sufficiently cooled to peel off the envelope without damaging the surface.

The peeling means comprise a roll-up system 9a, 9b consisting of an upper and lower roll for rolling up respectively the upper and lower foil, and at least one upper and lower guide roller 14a, 14b. After removal of these foils, the formed products 8 are discharged.

The invention is not limited to the above described embodiments or those illustrated in the drawing. The envelope can thus be arranged in many different ways. The envelope could for instance first be placed in the mould and the material then arranged therein, wherein the material, if it is a reasonably viscous material, can optionally be cast or injected.

## Claims

1. Method for shaping a deformable material having a glass transition temperature indicating the transition in the glass phase of the material, which glass transition temperature (point B) is smaller than the solidification temperature (point C), which method comprises the following steps of:
- arranging a thin envelope (5a, 5b) around a portion (6) of the material for deforming,
- bringing into shape the whole of the portion of material and envelope at a first temperature, at which temperature the material is deformable and adheres to the envelope, said whole having a surface layer,
- bringing to a second temperature at least the surface layer of the whole,
- peeling off the envelope,
**characterized in that** the second temperature is lower than a determined temperature, said determined temperature laying between the solidification temperature and the glass transition temperature of the deformable material and being such that the envelope can be peeled from the material without surface damage of the material.

2. Method as claimed in claim 1, **characterized in that** the second temperature is higher than the glass transition temperature of the deformable material.

3. Method as claimed in either of the foregoing claims, **characterized in that** the first temperature is the ambient temperature.

4. Method as claimed in any of the foregoing claims, **characterized in that** the deformable material is a foodstuff such as marzipan or a dairy product.

5. Method as claimed in any of the foregoing claims, **characterized in that** shaping takes place by compressing the material and the thin envelope.

6. Method as claimed in any of the foregoing claims, **characterized in that** the arranging of the envelope around the portion of material consists of arranging said portion between two foils.

7. Method as claimed in any of the foregoing claims, **characterized in that** the deformable material is ice cream.

8. Method of claim 6, **characterized in that** the arranging of the envelope around the portions consists of unrolling a lower foil from a lower supply roll (2b) and unrolling an upper foil from an upper supply roll (2a).

9. Method as claimed in any of the previous claims, **characterized in that** peeling off the envelope consists of rolling up respectively the lower and upper foil.

10. Method as claimed in any of the previous claims, **characterized in that** the bringing into shape consists of the compressing of the material in a multi-part mould (3a, 3b).

## Patentansprüche

1. Verfahren zum Formen eines verformbaren Materials mit einer Einfriertemperatur (Glasübergangstemperatur), die den Übergang in die Gefrierphase (Glasphase) des Materials angibt, wobei die Einfriertemperatur (Punkt B) niedriger ist als die Erstarrungstemperatur (Punkt C), wobei das Verfahren die folgenden Schritte aufweist:
- Anordnen einer dünnen Hülle (5a, 5b) um einen Teil (6) des Materials zum Verformen,
- Ausformen des gesamten Teils des Materials und der Hülle bei einer ersten Temperatur, bei der das Material verformbar ist und an der Hülle anhaftet,wobei das Ganze eine Oberflächenschicht aufweist,
- Bringen auf eine zweite Temperatur von mindestens der Oberflächenschicht des Ganzen,
- Abziehen der Hülle,
**dadurch gekennzeichnet, dass**
die zweite Temperatur niedriger ist als eine vorgegebene Temperatur, wobei die vorgegebene Temperatur zwischen der Erstarrungstemperatur und der Einfriertemperatur des verformbaren Materials liegt und dergestalt ist, dass die Hülle von dem Material abgezogen werden kann, ohne dass die Oberfläche des Materials beschädigt wird.

2. Verfahren gemäß Anspruch 1,
**dadurch gekennzeichnet, dass**
die zweite Temperatur höher ist als die Erstarrungstemperatur des verformbaren Materials.

3. Verfahren gemäß einem der vorhergehenden Ansprüche,
**dadurch gekennzeichnet, dass**
die erste Temperatur die Umgebungstemperatur ist.

4. Verfahren gemäß einem der vorhergehenden Ansprüche,
**dadurch gekennzeichnet, dass**
das verformbare Material ein Nahrungsmittel wie Marzipan oder ein Milchprodukt ist.

5. Verfahren gemäß einem der vorhergehenden Ansprüche,
**dadurch gekennzeichnet, dass**
die Formung **dadurch** stattfindet, dass das Material und die dünne Hülle zusammengepresst werden.

6. Verfahren gemäß einem der vorhergehenden Ansprüche,
**dadurch gekennzeichnet, dass**
die Anordnung der Hülle um den Teil des Materials daraus besteht, dass der Teil zwischen zwei Folien angeordnet wird.

7. Verfahren gemäß einem der vorhergehenden Ansprüche,
**dadurch gekennzeichnet, dass**
das verformbare Material Eiscreme ist.

8. Verfahren von Anspruch 6,
**dadurch gekennzeichnet, dass**
die Anordnung der Hülle um die Teile daraus besteht, dass eine untere Folie von einer unteren Versorgungsrolle (2b) und eine obere Folie von einer oberen Versorgungsrolle (2a) abgewickelt wird.

9. Verfahren gemäß einem der vorhergehenden Ansprüche,
**dadurch gekennzeichnet, dass**
das Abziehen der Hülle daraus besteht, dass die entsprechende obere und untere Folie aufgewickelt wird.

10. Verfahren gemäß einem der vorhergehenden Ansprüche,
**dadurch gekennzeichnet, dass**
das in Form bringen daraus besteht, dass das Material in einer mehrteiligen Form (3a, 3b) zusammengepresst wird.

## Revendications

1. Procédé pour mouler un matériau déformable ayant une température de transition vitreuse indiquant la transition dans la phase vitreuse du matériau, laquelle température de transition vitreuse (point B) est inférieure à la température de solidification (point C), lequel procédé comprend les étapes suivantes consistant à :
- aménager une mince enveloppe (5a, 5b) autour d'une portion (6) du matériau à déformer,
- mettre en forme l'ensemble de la portion de matériau et de l'enveloppe à une première température, à laquelle température le matériau peut être déformé et adhère à l'enveloppe, ledit ensemble ayant une couche de surface,
- amener à une seconde température au moins la couche de surface de l'ensemble,
- arracher l'enveloppe,
**caractérisé en ce que** la seconde température est inférieure à une température déterminée, ladite température déterminée s'étendant entre la température de solidification et la température de transition vitreuse du matériau déformable et étant telle que l'enveloppe puisse être arrachée du matériau sans endommager la surface du matériau.

2. Procédé selon la revendication 1, **caractérisé en ce que** la seconde température est supérieure à la température de transition vitreuse du matériau déformable.

3. Procédé selon l'une quelconque des revendications précédentes, **caractérisé en ce que** la première température est la température ambiante.

4. Procédé selon l'une quelconque des revendications précédentes, **caractérisé en ce que** le matériau déformable est un produit alimentaire tel que du massepain ou un produit laitier.

5. Procédé selon l'une quelconque des revendications précédentes, **caractérisé en ce que** le moulage se fait en comprimant le matériau et l'enveloppe mince.

6. Procédé selon l'une quelconque des revendications précédentes, **caractérisé en ce que** l'aménagement de l'enveloppe autour de la portion de matériau consiste à disposer ladite portion entre deux films.

7. Procédé selon l'une quelconque des revendications précédentes, **caractérisé en ce que** le matériau déformable est de la crème glacée.

8. Procédé selon la revendication 6, **caractérisé en ce que** l'aménagement de l'enveloppe autour des portions consiste à dérouler un film inférieur d'un rouleau d'alimentation inférieur (2b) et à dérouler un film supérieur d'un rouleau d'alimentation supérieur (2a).

9. Procédé selon l'une quelconque des revendications précédentes, **caractérisé en ce que** l'arrachage de l'enveloppe consiste à enrouler respectivement le film inférieur et le film supérieur.

10. Procédé selon l'une quelconque des revendications précédentes, **caractérisé en ce que** la mise en forme consiste à comprimer le matériau dans un moule en plusieurs parties (3a, 3b).
